# NEUE EUROPÄISCHE PATENTSCHRIFT

(11) **EP 2 054 572 B2**
(45) Veröffentlichungstag und Bekanntmachung des Hinweises auf die Entscheidung über den Einspruch: **22.01.2014**
(45) Hinweis auf die Patenterteilung: 21.07.2010
(21) Anmeldenummer: 07786649.9
(22) Anmeldetag: 10.08.2007
(51) Int. Cl.: E05B 65/20, B60R 11/04

(54) **VORRICHTUNG ZUM ÖFFNEN EINES FAHRZEUGSCHLOSSES UND ZUR BILDERFASSUNG IM AUSSENBEREICH VOM FAHRZEUG**
DEVICE FOR OPENING A VEHICLE LOCK AND FOR CAPTURING AN IMAGE ON THE EXTERIOR OF THE VEHICLE
DISPOSITIF POUR OUVRIR UNE SERRURE DE VÉHICULE AUTOMOBILE ET POUR LA PRISE D'IMAGE DANS LA ZONE EXTERNE DU VÉHICULE

(30) Priorität: 22.08.2006 DE 102006039192
(43) Veröffentlichungstag der Anmeldung: 06.05.2009
(73) Patentinhaber: Huf Hülsbeck & Fürst GmbH & Co. KG, 42551 Velbert (DE)
(72) Erfinder: SCHUETZ, Heiko, 42549 Velbert (DE)
(74) Vertreter: Zenz
(86) Internationale Anmeldenummer: PCT/EP2007/007077
(87) Internationale Veröffentlichungsnummer: WO 2008/022717

(56) Entgegenhaltungen:
- EP-A- 1 529 688
- EP-B1- 1 332 923
- DE-A1- 10 059 786
- DE-A1- 10 204 764
- DE-A1-102004 050 297
- DE-U1-202006 002 912
- FR-A- 2 858 280

## Beschreibung

Die Erfindung richtet sich auf eine Vorrichtung der im Oberbegriff des Anspruches 1 angegebenen Art. Diese Vorrichtung hat eine doppelte Funktion. Sie dient zunächst zum Öffnen des Schlosses, wozu eine Handhabe in einem schalenförmigen Träger klappbeweglich gelagert ist, der in einem Durchbruch einer Außenverkleidung der Fahrzeugkarosserie sich befindet. Dieser schalenförmige Träger soll nachfolgend kurz "Trägerschale" bezeichnet werden. Die Handhabe wirkt auf das Schloss.

Die weitere Funktion der Vorrichtung besteht darin, den Außenbereich vom Fahrzeug bildlich zu erfassen. Die dazu dienende Kamera ist an der Rückwand der Trägerschale angeordnet. Wenn die Kamera deaktiviert ist, befindet sich die Handhabe in ihrer Zuklapplage, wo sie die Schalenöffnung der Trägerschale verschließt. Wenn die Kamera aktiviert werden soll, wird die Handhabe in eine Aufklapplage überführt.

Die DE 10 2004 050 297 A1 zeigt eine solche bekannte Vorrichtung. Hier ist die Kamera ortsfest in der Rückwand der Trägerschale eingelassen. Bei aktiver Kamera behindert die Schalenöffnung und die in Aufklapplage befindliche Handhabe das Blickfeld, weshalb der Außenbereich des Fahrzeugs nur unzureichend erfasst wird.

Die EP 1 529 688 A1 zeigt eine Vorrichtung anderer Art, wo die Kamera drehfest auf der Rückseite eines klappbeweglichen Schutzelements angeordnet ist. Bei der Klappbewegung des Schutzelements wird die Kamera gleich mit verschwenkt. Die Anwendung einer solchen mitverschwenklichen Kamera auf eine Vorrichtung zum Öffnen eines Schlosses mittels einer Handhabe ist schwierig und hat den Nachteil, dass auch bei Öffnungsbewegungen des Schlosses die Kamera ausfährt und dabei beschädigt oder verschmutzt wird. Außerdem erhöht die mitbewegliche Kamera die Masse des Schutzelements, weshalb größere Drehmomente zu ihrer Klappbewegung erforderlich sind.

Der Erfindung liegt die Aufgabe zugrunde, eine zuverlässige Vorrichtung der im Oberbegriff des Anspruches 1 genannten Art zu entwickeln, welche raumsparend ausgebildet ist und die beiden Funktionen des Schloss-Öffnens und der Bild-Erfassung optimal erfüllt. Dies wird durch die im Anspruch 1 angeführten Maßnahmen erreicht, denen folgende besondere Bedeutung zukommt.

Die Erfindung erlaubt es, die Vorrichtung mit einer Option zur Anordnung einer Kamera vorzusehen, weshalb sie auch an Fahrzeugen anwendbar ist, wo es nur auf das Öffnen des Schlosses ankommt und eine Bilderfassung vom Außenbereich des Fahrzeugs nicht gewünscht wird. Dies ist möglich, weil einerseits die Handhabe in üblicher Weise an der Trägerschale klappbeweglich ist und das Loch in der Rückwand der Trägerschale auch unbenutzt bleiben kann. Weil die Handhabe unabhängig von der Kamera angeordnet ist, ist sie leichtgängig zu betätigen. Wenn aber eine Bilderfassung erwünscht ist, dann genügt es erfindungsgemäß im Loch der Schalen-Rückwand das Gehäuse eines im Anspruch 1 angegebenen Moduls anzuordnen. Im Modulgehäuse ist die Kamera über einen Halter sowohl schwenkbar gelagert als auch translatorisch geführt, der nachfolgend kurz "Kamerahalter" genannt werden soll. Bestandteil des Moduls ist auch Antrieb, z.B. in Form eines elektrischen Motors und ein Getriebe. Das Modul ist komplett vormontiert und beinhaltet alle Elemente zur mechanischen Lagerung und Bewegung der Kamera bzw. ihres Kamerahalters zusammen mit den erforderlichen elektrischen Anschlüssen zur Signalübertragung und Stromversorgung.

Weil bei der Erfindung für die Bewegung der Kamera rotatorisch-translatorische Mittel vorgesehen sind, ergibt sich ein raumsparender Aufbau in der Einfahrstellung der Kamera. In der Einfahrstellung kann nämlich die Kamera von einem Fenster im Modulgehäuse abgekehrt sein. Dadurch nimmt sie im Inneren des Modulgehäuses eine raumsparende Längsposition ein. Die rotatorisch-translatorischen Steuermittel sorgen aber zugleich dafür, dass in der Ausfahrstellung die Kamera eine Neigungsposition im Gehäuseinneren einnimmt. Das Bild-Aufnahme-Ende der Kamera ragt dann aus dem Modulgehäuse heraus und kann dann auch aus der Schalenöffnung der Trägerschale herausragen.

Normalerweise werden solche Vorrichtungen individuell einer Fahrzeugtype angepasst und weisen eine zueinander unterschiedliche Form und/oder Größe auf. Die Erfindung erlaubt es, ein einziges baueinheitliches Modul einer Vielzahl von unterschiedlichen Typen der Vorrichtung zuzuordnen, bei denen lediglich die Rückwand der zugehörigen Trägerschale ein geeignetes Loch zur Befestigung des Gehäuses vom erfindungsgemäßen Modul aufweist. Weil nur ein einziges Modell eines Moduls für viele unterschiedliche Vorrichtungen verwendet werden kann, kann es in großer Stückzahl hergestellt werden. Dadurch ergibt sich eine besonders preiswerte Herstellung. Das Montieren und Demontieren des Moduls am Loch der Schalen-Rückwand lässt sich schnell und bequem ausführen.

Der Motor vom Modul kann an der Außenseite des Modulgehäuses befestigt sein. Wie Anspruch 13 vorschlägt, dient zur rotatorisch-translatorischen

Bewegung des Kamerahalters mindestens ein Kulissengetriebe. Dabei kann die Schwenklagerung vom Kamerahalter in den Kulissenstein vom Kulissengetriebe integriert sein. Es empfiehlt sich, das Kulissengetriebe einerseits aus einem zweiteiligen Kulissenstein am Kamerahalter und einer zweiteiligen Kulisse am Modulgehäuse auszubilden. Der Kulissenstein sollte dabei aus einem Abschnitt eines Schwenkgliedes vom Kamerahalter bestehen, wobei das Schwenkglied die Kamera zwischen einer Einfahrstellung und einer Ausfahrstellung verschwenkbar macht.

Gemäß Anspruch 15 dient ein Zahnradgetriebe zur Bewegung des Kamerahalters. In Abwandlung der dortigen Konstruktion kann ein Ausgangszahnrad vom Getriebe drehfest mit einer Lagerwelle eines Hebelarms verbunden sein. Der Hebelarm ist dabei am Kamerahalter angelenkt.

Eine weitere Alternative zum Zahnradgetriebe von Anspruch 15 besteht darin, die Welle eines Ausgangszahnrades vom Getriebe drehfest mit einem Hebel zu verbinden, der im Modulgehäuse schwenkbar gelagert ist. Das Ende vom Hebel ist ebenfalls am Kamerahalter angelenkt und am Kamerahalter greift mindestens ein Kulissengetriebe an.

Die erwähnte translatorische Bewegung des Kamerahalters ist vorzugsweise durch ein doppeltes Kulissengetriebe steuerbar. Dieses doppelte Kulissengetriebe besteht aus zwei zueinander versetzten Kulissen am Modulgehäuse, in welche zwei am Kamerahalter befindliche Kulissensteine eingreifen.

Es empfiehlt sich, den erwähnten Deckel mit Steuermitteln zu versehen, die bei einer Schwenkbewegung des Deckels für eine Aufklappbewegung und/oder Zuklappbewegung der Handhabe in der Trägerschale sorgen. Um einen einfachen und zuverlässigen Aufbau zu erhalten, empfiehlt es sich, die Steuermittel des Deckels einerseits aus einer Schulter am Deckel und andererseits aus einer Gegenschulter an der Handhabe aufzubauen und dabei die Handhabe in Richtung ihrer Zuklapplage federzubelasten.

Die Aufklappbewegung und/oder Zuklappbewegung der Handhabe erfolgt über einen Motor. Der Motor startet die Bewegung der Handhabe spätestens zu Beginn der Kamera-Aktivierung im Aufklappsinne. Alternativ oder ergänzend beendet der Motor die Bewegung der Handhabe nach Deaktivierung der Kamera im Zuklappsinne. Schließlich sollte man den Motor mit zwei Getriebeausgängen und/oder Kupplungen versehen, von denen die eine zur Schwenksteuerung des Kamerahalters und die andere zur Klappbewegung der Handhabe dienen.

Bei Ihrer Betätigung kann die Handhabe über mechanische Glieder auf das Schloss wirken. Alternativ könnte man aber zur Betätigung der Handhabe elektrische oder elektronische Glieder verwenden, die auf das Schloss wirken.

Weitere Maßnahmen und Vorteile der Erfindung ergeben sich aus den Unteransprüchen, der nachfolgenden Beschreibung und den Zeichnungen. In den Zeichnungen ist die Erfindung in mehreren Ausführungsbeispielen dargestellt. Es zeigen:
- Fig. 1: in perspektivischer Darstellung, die Vorderansicht der erfindungsgemäßen Vorrichtung, wenn sie in der Außenverkleidung einer Heckklappe eines Fahrzeugs montiert ist, wobei ihre Handhabe sich in einer Aufklapplage und eine Kamera in einer Ausfahrstellung befinden,
- Fig. 2: ein Teilstück der erfindungsgemäßen Vorrichtung, nämlich die rückseitige Ansicht einer Trägerschale, an welcher der weitere Teil der erfindungsgemäßen Vorrichtung, nämlich ein Modul, noch nicht befestigt ist,
- Fig. 3: die aus der Trägerschale und dem Modul bestehende komplette Vorrichtung in einer rückseitigen, perspektivischen Ansicht,
- Fig. 4: eine teilweise geschnittene Seitenansicht durch die Vorrichtung von Fig. 1 oder 3, wenn sich die Handhabe in ihrer Aufklapplage befindet, aber ein Kamerahalter sich noch in seiner Einfahrstellung in einem Gehäuse des Moduls befindet,
- Fig. 5a: eine zu Fig. 4 analoge Darstellung in einer anderen Schnittebene, woraus auch die im Inneren des Modulgehäuses befindlichen Bauteile zu erkennen sind,
- Fig. 5b: eine zeichnerische Darstellung der in Fig. 5a vorgegebenen Verhältnisse,
- Fig. 6a: in einer zu Fig. 5a entsprechenden Schnittdarstellung, wo sich zwar die Handhabe immer noch in ihrer Aufklapplage befindet, aber die Kamera eine Ausfahrstellung im Modulgehäuse aufweist und dabei mit ihrem Bild- Aufnahme-Ende auch aus der Schalenöffnung der Trägerschale herausragt,
- Fig. 6b: eine zeichnerische Darstellung der in Fig. 6a vorgegebenen Verhältnisse,
- Fig. 7: eine perspektivische Ansicht auf die eine Seite des Moduls, bevor es an der Trägerschale der Vorrichtung befestigt ist und die Kamera sich in ihrer Einfahrstellung befindet,
- Fig.8: in einer zu Fig. 7 analogen Darstellung, eine perspektivische Darstellung des Moduls von der gegenüber Fig. 7 gegenüberliegenden Seite,
- Fig. 9: in perspektivischer Draufsicht, eine Explosionsdarstellung der zum Aufbau des Moduls erforderlichen Bauteile,
- Fig. 10: in einer der Fig. 7 entsprechenden perspektivischen Seitenansicht, das Modul, wenn sich die Kamera in ihrer Ausfahrstellung befindet und das zugehörige Getriebe die entsprechende Stellung einnimmt,
- Fig. 11: in einer der Fig. 10 entsprechenden Darstellung, eine erste alternative Ausführung des Moduls gegenüber dem ersten Ausführungsbeispiel in den vorausgehenden Fig. 3 bis 9, und
- Fig. 12: in perspektivischer Ansicht von oben, eine zweite Alternative für den Aufbau eines Moduls der erfindungsgemäßen Vorrichtung.

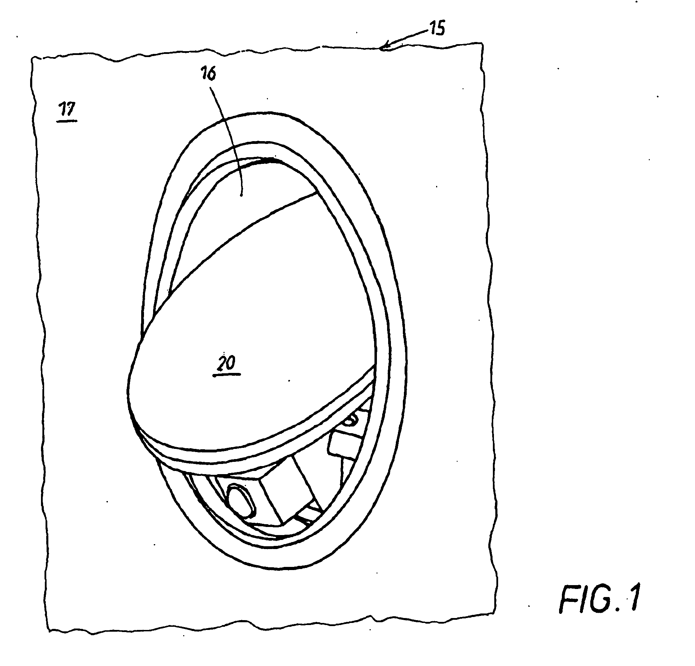

Wie die Fig. 1, 2 und 4 zeigen, gehört zur erfindungsgemäßen Vorrichtung ein schalenförmiger Träger 10, der, wie bereits gesagt wurde, "Trägerschale" genannt werden soll. Diese Trägerschale ist, wie Fig. 1 zeigt, in einem Durchbruch 16 einer Außenverkleidung 17 eines beweglichen Teils der Karosserie eines Fahrzeugs befestigt, das im vorliegenden Fall aus einer Heckklappe 15 besteht.

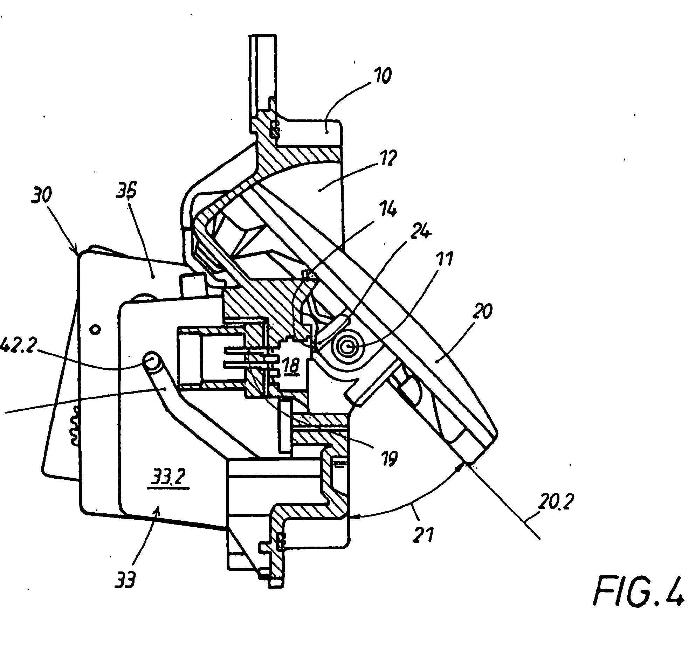

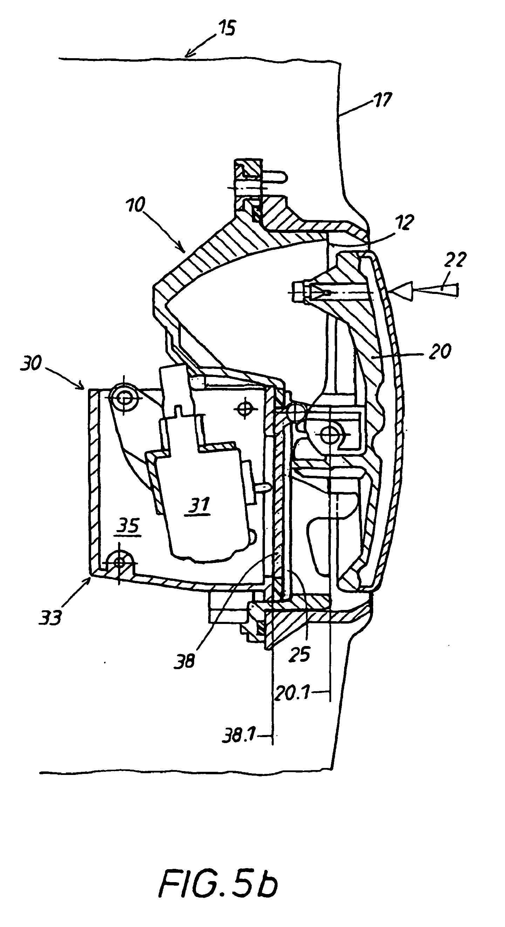

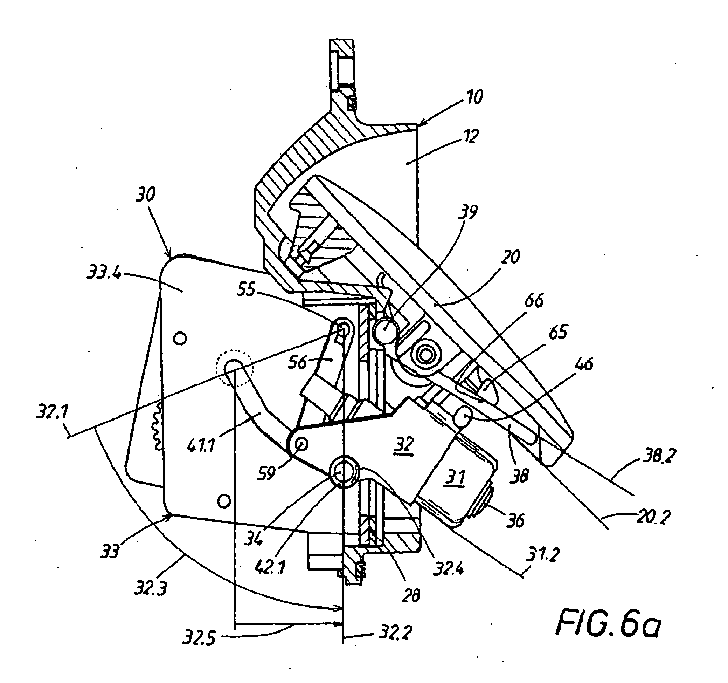

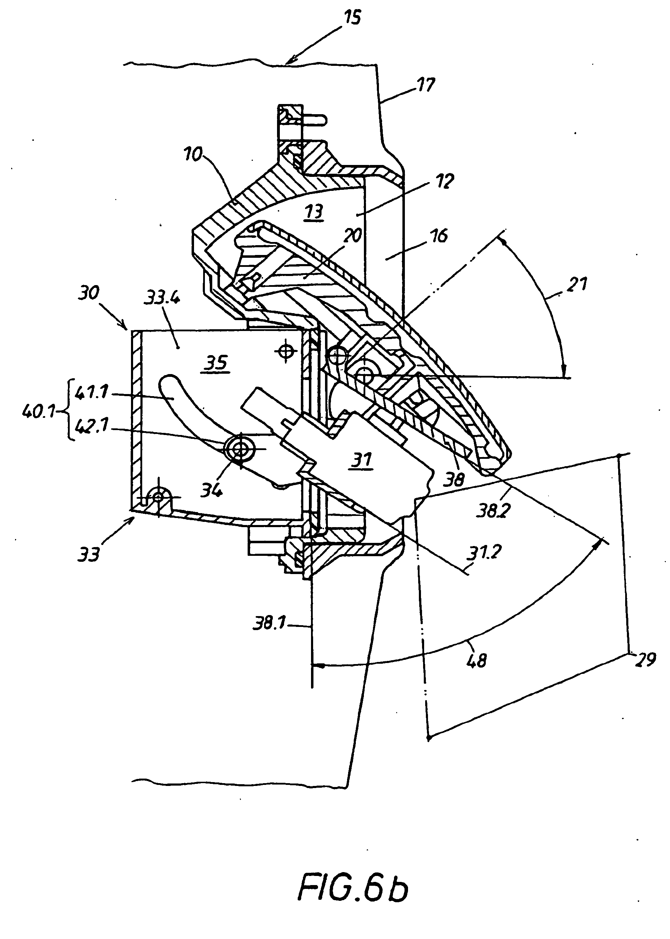

Auf einer Achse 11 in der Trägerschale ist eine Handhabe 20 im Sinne des Klappbewegungspfeils 21 von Fig. 4 und 6b klappbeweglich. Bei unbetätigter Zuklapplage 20.1, die in Fig. 5b dargestellt und in durch eine Hilfslinie verdeutlicht ist, verschließt die Handhabe 20 eine Schalenöffnung 12, die dem Durchbruch 16 der Außenverkleidung 17 zugekehrt ist. Wird die Handhabe 20 betätigt, so gelangt sie in die aus Fig. 4 ersichtliche Aufklapplage, die in Fig. 6a durch die Hilfslinie 20.2 markiert ist. Die Handhabe 20 steht unter der Wirkung einer nicht näher gezeigten Federkraft, die bestrebt ist, sie in der aus Fig. 5b ersichtlichen Zuklapplage 20.1 zu bewegen.

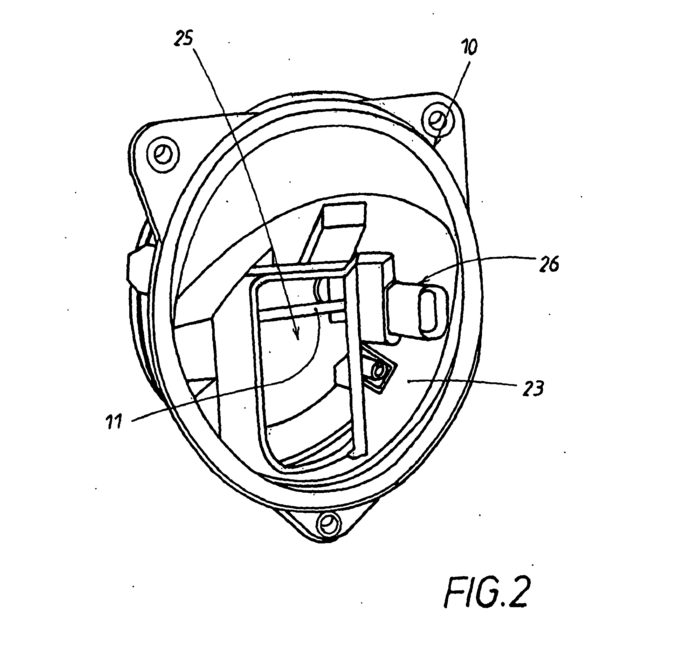

Zu ihrer Betätigung wird ein Druck im Sinne des Pfeils 22 auf die Handhabe 20 ausgeübt, wodurch es zu der erwähnten Klappbewegung 21 kommt. Dabei gelangt ein oberer Bereich der Handhabe 20 ins Innere 13 der Trägerschale 10, während der untere Handhaben-Bereich aus der Trägerschale 10 herausgeschwenkt wird. In der Aufklapplage 20.2 von Fig. 4 stößt eine Schulter 24 gegen einen Betätiger 14. In Fig. 4 sind auch die Kontaktstifte 19 dieses Schalters 18 zu erkennen, die nach der Montage des Schalters in der Trägerschale 10 vergossen sind. Wie Fig. 2 zeigt, ist an der Rückwand 23 der Trägerschale 10 ein Steckanschluss 26 für den Schalter 18 angespritzt. Die Kontaktstifte 19 sind in elektrischer Verbindung mit dem Antrieb eines nicht näher gezeigten Schlosses, welches in der Aufklapplage 20.2 der Handhabe 20 öffnet. Dann kann die Heckklappe 15 gegenüber dem ruhenden Teil der Karosserie hochgeschwenkt werden.

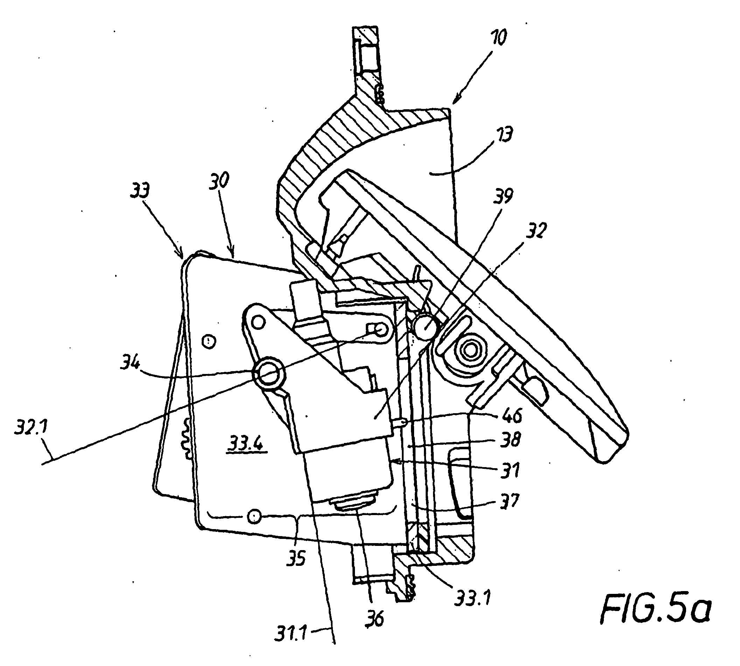

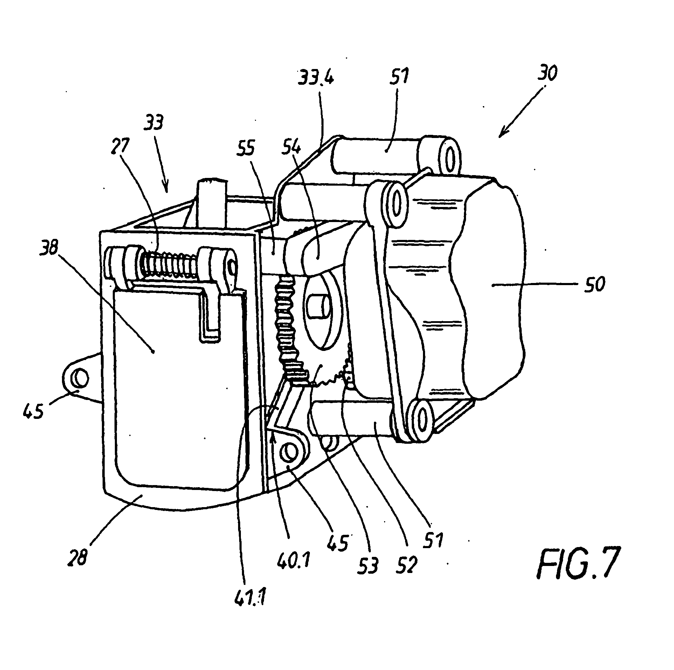

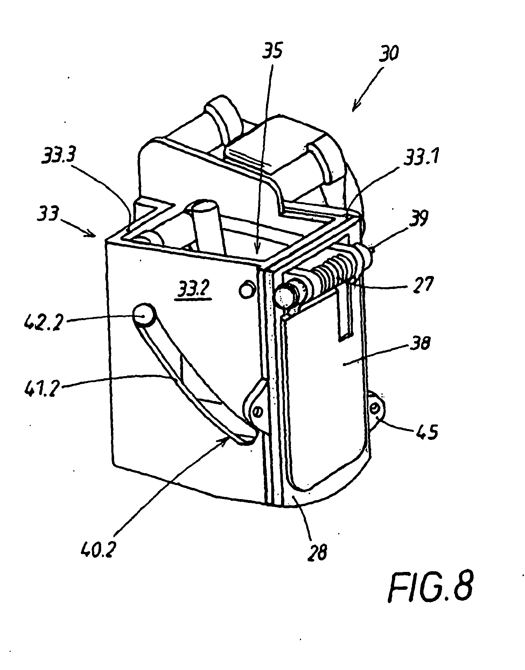

Wie aus Fig. 2 zu ersehen ist, befindet sich in einer Rückwand 23 der Trägerschale 10 ein Loch 25, an welches ein aus den Fig. 7 bis 10 im Detail gezeigtes Modul 30 wahlweise befestigt werden kann. Dazu dienen am Gehäuse 33 des Moduls 30 vorgesehene Laschen 45, die am besten aus Fig. 7 und 8 zu erkennen sind. Mittels dieser Laschen 45 wird das Modul 30 an der Rückwand 23 der Trägerschale 10 festgeschraubt. Ein wichtiger Bestandteil des Moduls 30 ist eine elektronische Kamera 31, die gemäß Fig. 5a von einem Halter 32 aufgenommen ist. Wie bereits gesagt wurde, soll der Halter 32 "Kamerahalter" genannt werden.

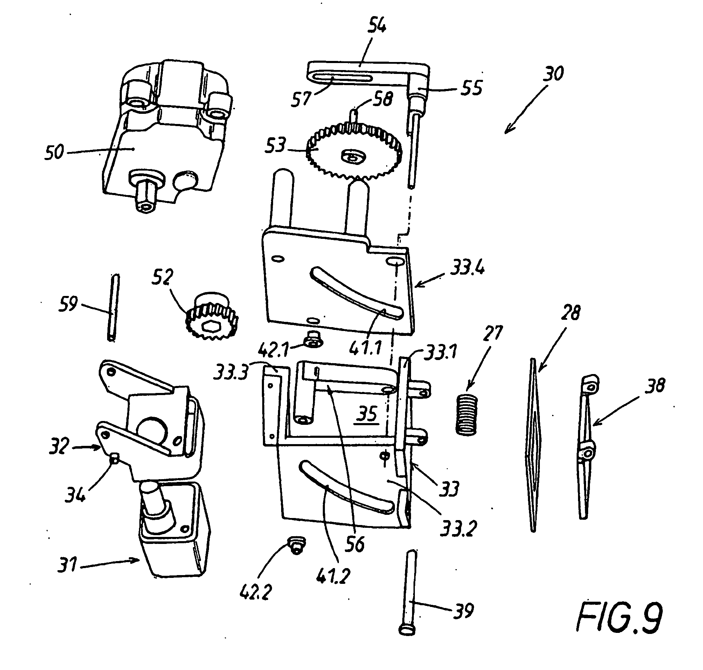

Das Modul 30 umfasst zunächst ein Gehäuse 33, welches nachfolgend kurz als "Modulgehäuse" bezeichnet werden soll. Das Modulgehäuse 33 hat die Form einer Hülse mit Rechteckprofil, bestehend aus einer vorderen Hülsenwand 33.1 und, wie die Explosionsdarstellung von Fig. 9 am besten erkennen lässt, einer damit einstückigen ersten Seitenwand 33.2 und einer Rückwand 33.3, die endseitig eine Flanschleiste zum Anschluss der gegenüberliegenden zweiten Seitenwand 33.4 hat. Im Gehäuseinneren 35 befindet sich die im Kamerhalter 32 aufgenommene Kamera 31, wie Fig. 5a erkennen lässt. Der Kamerahalter 32 ist zusammen mit der Kamera 31 auf einer Schwenkachse 35 rotatorisch verschwenkbar, aber zugleich mit seiner Schwenkachse 34 translatorisch bewegbar, was anhand der Fig. 5a und 6a näher erläutert werden soll.

In Fig. 5a befindet sich der Kamerahalter in einer durch die Hilfslinie 32.1 veranschaulichten Ruhestellung mit seiner Schwenkachse 34. Dann befindet sich die Kamera 31 in einer raumsparenden Längsposition im Gehäuseinneren 35, wo sie mit ihrem durch das Objektiv 36 gekennzeichneten Bild-Aufnahme-Ende von einem Fenster 37 in der vorderen Hülsenwand 33.1 abgekehrt ist. Die Kamera 31 befindet sich dann in einer durch die Hilfslinie 31.1 verdeutlichten Einfahrstellung im Gehäuseinneren 35. Dabei ist das Fenster 37 durch einen Deckel 38 verschlossen.

Der Deckel 38 ist bei diesem Ausführungsbeispiel bei 39 schwenkgelagert und steht unter der Belastung einer Feder 27. Die Feder 27 ist bestrebt, den Deckel 38 an das Fenster 37 vom Modulgehäuse 33 angedrückt zu halten. Zwischen der Stirnfläche des Fensters 37 und dem Deckel 38 ist eine aus den Fig. 7 bis 9 erkennbare Dichtung 28 angeordnet, die in der Schließposition des Deckels 38 von Fig. 5a das Gehäuseinnere 35 vom Innenraum 13 gut absperrt.

Ausgehend von der Ruhestellung 32.1 des Kamerahalters 32 mit der Einfahrstellung 31.1 der Kamera 31 von Fig. 5a ergeben sich nach der kombinierten rotatorischen-translatorischen Bewegung die aus Fig. 6a ersichtlichen Verhältnisse. Dann ist der Kamerahalter 32 in eine durch die Hilfslinie 32.2 markierte Arbeitsstellung gelangt. Das wäre eine Schwenkbewegung des Kamerahalters 32 im Sinne des in Fig. 6a eingezeichneten Wegs 32.3. Dabei führt der Kamerahalter 32 um seine Schwenkachse 34 auch noch eine Rückdrehung 32.4 um seine Schwenkachse 34 aus, woraus sich die aus Fig. 6a mit der Hilfslinie 31.2 markiert Ausfahrstellung der Kamera 31 ergibt.

Weil in Fig. 6a auch die aus Fig. 5a ersichtliche Ruhestellung 32.1 eingezeichnet ist, erkennt man außer der Drehung 32.4 und Schwenkbewegung 32.3. auch einen translatorischen Anteil 32.5 der Gesamtbewegung vom Kamerahalter 32. Die Kamera 31 ragt mit ihrem Bild-Aufnahme-Ende 36 nicht nur aus dem Modulgehäuse 33, sondern auch aus der Schalenöffnung 12 der Trägerschale 10 heraus. In der Ausfahrlage 21.2 ergibt sich aus Fig. 6b ein großer Sichtkegel 29 der Kamera. In der Ausfahrstellung 31.2 verläuft die Kamera annähernd parallel zur Aufklapplage 20.2 der Handhabe 20.

Bei der Schwenkbewegung 32.3 des Kamerahalters 32 wird auch der Deckel 38 aus seiner in Fig. 5b durch die Hilfslinie 38.1 gekennzeichneten Schließposition in die aus Fig. 6b erkennbare Offenposition 38.2 überführt. Dies könnte unmittelbar durch eine Ergänzung des Getriebes, das zur Bewegung des Kamerahalters 32 benutzt wird und noch näher beschrieben werden wird. Im vorliegenden Fall erfolgt dies unmittelbar über die Kamerahalterung 32, nämlich einen dort vorgesehenen Betätiger 46, der z.B. als Vorsprung 46 am Kamerahalter 32 gemäß Fig. 6a ausgebildet ist. Beim Verschwenken 32.3 des Kamerahalters 32 stößt der Vorsprung 46 gegen die Innenfläche des Deckels 38 und hebt ihn, gegen die beschriebene Federbelastung der Deckel-Feder 27 von Fig. 7, an bis zu der aus Fig. 6b ersichtlichen Offenposition 38.2. Solange sich die Kamera 31 in ihrer Ausfahrposition 31.2 von Fig. 6a befindet, wird die Offenposition 38.2 des Deckels 38 aufrechterhalten.

Der Antrieb zur rotatorisch-translatorischen Bewegung der Kamera 31 geht von einem elektrischen oder hydraulischen Antrieb aus. Im vorliegenden Fall dient dazu ein elektrischer Motor 50, der Bestandteil des Moduls 30 gemäß Fig. 7 bis 9 ist. Der Motor 50 ist über Bolzen und Abstandhalter 51 an der Außenseite der zweiten Seitenwand 33.4 vom Modulgehäuse 33 festgeschraubt. Im Abstandsraum zwischen dem Motor 50 und der Seitenwand 33.4 befindet sich ein von der aus Fig. 9 ersichtlichen Motorwelle angetriebenes Zahnradgetriebe 32, 33. Auf der Motorwelle sitzt ein Eingangszahnrad 32, welches mit einem Ausgangszahnrad 53 kämmt. Dem Ausgangszahnrad 53 ist ein Doppelarm-Hebel 54 bis 56 nachgeschaltet, dessen Details aus den Fig. 9, 7 und 6 zu erkennen sind. Ein erster Arm 54 dieses Doppelarm-Hebels besitzt eine Längsführung 57 für ein Führungsglied 58, welches nach Art einer Kurbel am Ausgangszahnrad 53 sitzt. Dieser erste Arm 54 ist über eine Lagerwelle 55, die in Lagerbohrungen der beiden Seitenwände 33.4, 33.2 des Modulgehäuses 33 gelagert ist, drehfest mit einem zweiten Arm 56 dieses Doppelarm-Hebels verbunden, der im Gehäuseinneren 35 angeordnet ist. Das freie Ende des zweiten Arms 56 ist am inneren Ende des Kamerahalters 32 mittels eines Gelenkstifts 59 angelenkt. Wie Fig. 9 zeigt, ist dazu am freien Ende des Arms 56 eine Buchse angeformt, die den Stift 59 aufnimmt und zwischen einem gabelförmigen Innenende des Kamerahalters 32 über den Gelenkstift 59 montiert ist.

Der Kamerahalter 32 ist an seinem gabelförmigen Innenende mit zwei Lagerzapfen 20 versehen, von denen einer in Fig. 9 zu erkennen ist. Die beiden Lagerzapfen 35 bestimmen die bereits erwähnte Schwenkachse des Kamerahalters 32. Im vorliegenden Ausführungsbeispiel ist die Schwenkachse mit einer zweiteiligen Kulissenführung 40.1, 40.2 kombiniert, die sich an den beiden gegenüberliegenden Seitenwänden 33.2 und 33.4 vom Modulgehäuse 33 befinden und am besten in Fig. 7 und 8 zu erkennen sind. Jede der beiden Kulissenführungen 40.1, 40.2 besitzt eine als Schlitz in der zugehörigen Seitenwand 33.2, 33.4 eingelassene Kulisse 41.1, 41.2, in welche jeweils ein Kulissenstein 42.1 und 42.2 gleiten. Die beiden Kulissensteine 42.1, 42.2 sind einerseits hülsenförmig ausgebildet und nehmen die vorerwähnten, als Schwenkachse 34 fungierenden Lagerzapfen des Kamerahalters auf. Andererseits haben die beiden Kulissensteine 42.1, 42.2 einen rollenartigen Umfang, der ihre Bewegung in der zugehörigen Kulisse 41.1, 41.2 erleichtert. Wie besonders gut aus Fig. 6a zu entnehmen ist, bestehen die Kulissen 41.1, 41.2 aus kreisförmigen Ringnut-Segmenten, die koaxial zur Lagerwelle 55 des Doppelarm-Hebels angeordnet ist. Dieses Getriebe sorgt über den Motor 50 für die oben bereits ausführlich beschriebene rotatorisch-translatorische Bewegung der Kamera 31 beim Übergang zwischen ihrer Einfahrstellung 31.1 von Fig. 4, 5a und ihrer Ausfahrstellung 31.2 von Fig. 6a, 6b.

Damit die Kamera 31 ausfahren kann, empfiehlt es sich, motorisch auch für eine Aufklappbewegung 45 der Handhabe 20 zu sorgen. Die gegensinnige Zuklappbewegung der Handhabe 20 kann dann auch durch ihre bereits erwähnte Federbelastung zustande kommen. Es versteht sich, dass man für diese Klappbewegung 45 den gleichen Motor 50 verwenden sollte, der auch zur vorerwähnten rotatorisch-translatorischen Bewegung des Kamerahalters 32 benutzt wird. Man wird dabei den Motor 50 mit zwei nicht näher gezeigten Getriebeabgängen versehen oder entsprechende doppelte Kupplungen vorsehen, von denen die einen für die Steuerbewegung des Kamerahalters 32 und die anderen zur Klappbewegung der Handhabe 20 dienen. Diese Bewegungen kann man mit dem Beginn der Kameraaktivierung starten und nach Deaktivierung der Kamera 31 beenden. Zur Einleitung dieser Bewegungen könnte man den Deckel mit Steuermitteln versehen, die bei der aus Fig. 6b ersichtlichen Schwenkbewegung des Deckels 38 für die Aufklappbewegung der Handhabe 20 in der Trägerschale 10 sorgen. Die Bewegung in Gegenrichtung im Zuklappsinne könnte man entsprechend verfahren. Am einfachsten ist es, diese Steuermittel aus einer Schulter 65 am Deckel und einer Gegenschulter 66 an der Handhabe zu bilden, die in Fig. 6a gezeigt sind.

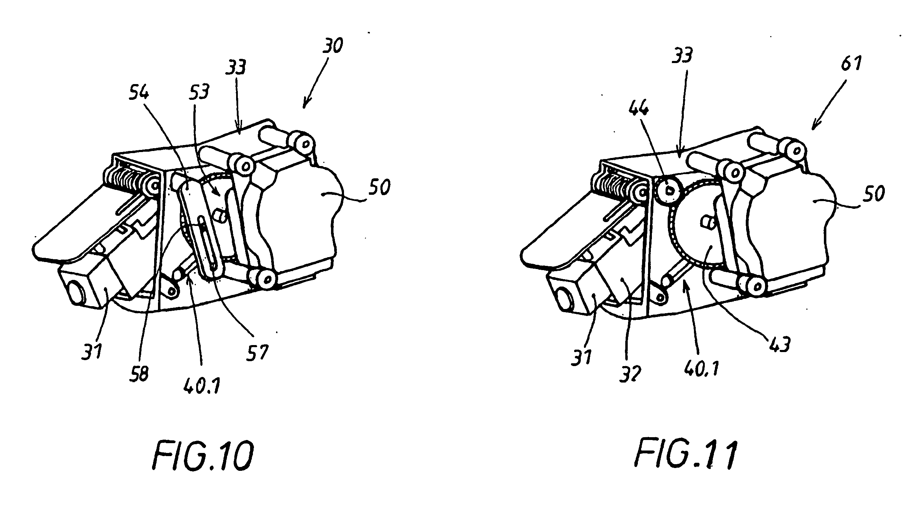

In Fig. 11 ist ein zweites Ausführungsbeispiel der Erfindung in Form eines alternativen Moduls 61 dargestellt, und zwar in einer der Fig. 10 des vorausgehenden Ausführungsbeispiels 30 analogen Darstellung. Es soll lediglich auf die Unterschiede eingegangen werden. In übriger Hinsicht gilt die bisherige Beschreibung des ersten Ausführungsbeispiels vom Modul 30.

Anstelle des beim Modul 30 vorgesehenen zweiten Arms 56 ist beim Modul 61 ein Zahnrad 43 angeordnet, welches mit einem Ausgangszahnrad 44 kämmt. Dieses Ausgangszahnrad 44 ist seinerseits drehfest mit einer Lagerwelle 55 des bereits beschriebenen Hebelarms 56 verbunden. Dieser Hebelarm 56 ist, wie im ersten Ausführungsbeispiel 30, am Kamerahalter 32 angelenkt. In diesem zweiten Ausführungsbeispiel 61 ist also lediglich der erste Arm 54 durch das neue Ausgangszahnrad 44 ersetzt.

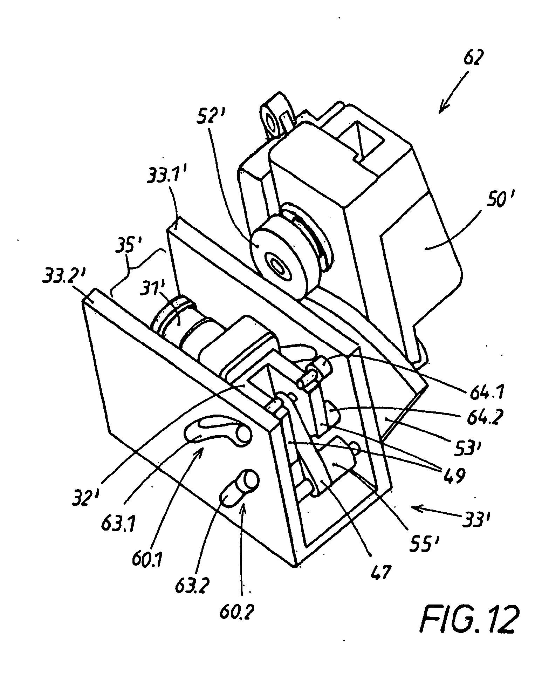

Die Fig. 12 zeigt ein drittes Ausführungsbeispiel 62 eines Moduls, welches ein abweichend ausgebildetes Getriebe zur rotatorisch-translatorischen Bewegung einer Kamera 31' und ihrem Kamerahalter 32' dient. Auch in diesem Fall ist ein Motor 50' in Abstand an der einen Seitenwand 33.1 eines Modulgehäuses 33' angeschlossen, welches ein U-förmiges Gehäuseprofil aufweist. Auf der Welle des Motors 50' sitzt ein Eingangszahnrad 52', welches mit einem Zahnrad-Segment 53' kämmt. Das Zahnrad-Segment 53' ist über seine im Modulgehäuse 33' drehgelagerte Welle 55' drehfest mit einem Arm 47 im Gehäuseinneren 35' verbunden. Das Ende des Arms 47 greift in den Gabelinnenraum eines Gabelendes 49 ein, welches zum Kamerahalter 32' gehört. Die rotatorisch-translatorische Bewegung der Kamera 31' wird durch ein doppeltes Kulissengetriebe 60.1, 60.2 gesteuert, dessen Bewegungsimpuls vom Hebelarm 47 ausgeht.

Auch in diesem Fall sind die beiden Kulissengetriebe 60.1, 60.2 zweiteilig ausgebildet und befinden sich in den beiden Seitenwänden 33.1' und 33.2'. Die gegenüberliegenden Teile der beiden Kulissengetriebe 60.1, 60.2 sind natürlich übereinstimmend zueinander gestaltet, weshalb es genügt, die in Fig. 12 sichtbaren Teile des einen oder des anderen Getriebes zu beschreiben, was natürlich sinngemäß für beide gilt. Die beiden Getriebe 60.1, 60.2 haben zunächst in den beiden Seitenwänden 33.2', 33.1' zwei zueinander höhenversetzte und formunterschiedliche Schlitze 63.1, 63.2, die als Kulissen für rollenförmige Kulissensteine 64.1, 64.2 dienen. Diese rollenförmigen Kulissensteine 64.1, 64.2 sitzen auf der Außenseite der beiden Gabelschenkel vom Gabelende 49 des dortigen Kamerahalters 32' und bilden zwei eigenständige Drehgelenkstellen zur gemeinsamen Schwenkbewegung der Kamera 31'. Die Kamera 31' wird zwischen ihrer in Fig. 12 gezeigten Einfahrstellung und einer nicht näher gezeigten Ausfahrstellung außerhalb des Modulgehäuses 33' rotatorisch-translatorisch bewegt. Letzteres ist von eigenständiger erfinderischer Bedeutung.

### Bezugszeichenliste:

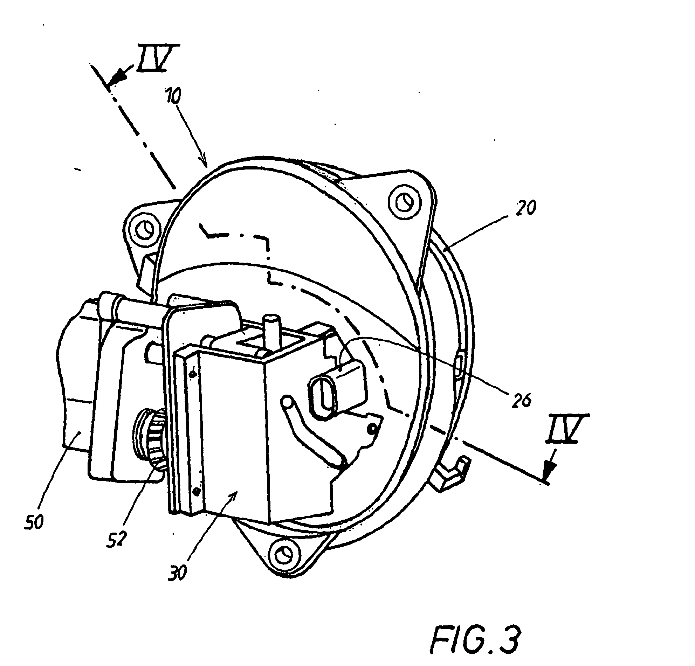

- 10: schalenförmiger Träger, Trägerschale
- 11: Achse von 20
- 12: Schalenöffnung von 10
- 13: Innenraum von 10 (Fig. 6a)
- 14: Betätiger von 18 (Fig. 4)
- 15: Heckklappe (Fig. 1)
- 16: Durchbruch in 17 (Fig. 1)
- 17: Außenverkleidung von 15 (Fig. 1)
- 18: elektrischer Schalter (Fig. 4)
- 19: Kontaktstifte von 18 (Fig. 4)
- 20: Handhabe
- 20.1: Zuklapplage von 20, unbetätigt (Fig. 5b)
- 20.2: Aufklapplage von 20, betätigt (Fig. 4, 6b)
- 21: Klappbewegungspfeil von 20 (Fig. 4, 6b)
- 22: Druckbetätigung von 20 (Fig. 5b)
- 23: Rückwand von 10 (Fig. 2)
- 24: Schulter an 20 für 14
- 25: Loch in 23 (Fig. 2, 5b)
- 26: Steckanschluss für 18 (Fig. 2, 3)
- 27: Feder für 38 (Fig. 7)
- 28: Dichtung für 38 (Fig. 7)
- 29: Sichtkegel von 31 bei 31.2 (Fig. 6b)
- 30: Modul, erste Ausführungsform (Fig. 7 bis 10)
- 31: Kamera von 30 (Fig. 5a)
- 31': Kamera von 62 (Fig. 12)
- 31.1: Einfahrbewegung von 31 (Fig. 5a)
- 31.2: Ausfahrbewegung von 31 (Fig. 6a, 6b)
- 32: Halter für 31, Kamerahalter (Fig. 5a)
- 32': Kamerahalter von 62 (Fig. 12)
- 32.1: Ruhestellung von 32 (Fig. 6a)
- 32.2: Arbeitsstellung von 32 (Fig. 6a)
- 32.3: Weg der Schwenkbewegung von 32 (Fig. 6a)
- 32.4: Pfeil der Rückdrehung von 32 (Fig. 6a)
- 32.5: translatorischer Weganteil von 32 (Fig. 6a)
- 33: Modulgehäuse von 30 (Fig. 4 bis 9)
- 33': Modulgehäuse von 62 (Fig. 12)
- 33.1: vordere Hülsenwand von 33 (Fig. 8, 9)
- 33.1': erste Seitenwand von 33' (Fig. 12)
- 33.2: erste Seitenwand von 33 (Fig. 8, 9)
- 33.2': zweite Seitenwand von 33' (Fig. 12)
- 33.3: Rückwand von 33 (Fig. 8, 9)
- 33.4: zweite Seitenwand von 33 (Fig. 6a, 9)
- 34: Lagerzapfen an 32, Schwenkachse (Fig. 6a, 9)
- 35: Gehäuseinneres von 33 (Fig. 5a, 9)
- 35': Gehäuseinneres von 33' (Fig. 12)
- 36: Bild-Aufnahme-Ende von 31, Objektiv (Fig. 5a, 6a)
- 37: Fenster in 33.2 (Fig. 5a)
- 38: Deckel für 37 (Fig. 7, 9)
- 38.1: Schließposition von 38 (Fig. 6b)
- 38.2: Offenposition von 38 (Fig. 6b)
- 39: Schwenklager von 38 (Fig. 8, 9)
- 40.1: Kulissenführung, erster Teil bei 33.4 (Fig. 7, 9)
- 40.2: Kulissenführung, zweiter Teil bei 33.2 (Fig. 8, 9)
- 41.1: schlitzförmige Kulisse in 33.4 (Fig. 9)
- 41.2: schlitzförmige Kulisse in 33.2 (Fig. 8, 9)
- 42.1: Kulissenstein in 41.1, Schwenklageraufnahme für 34 (Fig. 6a, 9)
- 42.2: Kulissenstein in 41.2, Schwenklageraufnahme für 34 (Fig. 6a, 9)
- 43: mittleres Zahnrad in 61 (Fig. 11)
- 44: Ausgangszahnrad in 61 (Fig. 11)
- 45: Befestigungslaschen an 33 (Fig. 7, 8)
- 46: Betätiger an 32 für 38 (Fig. 6a)
- 47: Hebelarm an 55' (Fig. 12)
- 48: Schwenkbewegungsweg von 38 (Fig. 6b)
- 49: Gabelende von 32' (Fig. 12)
- 50: Motor von 30 (Fig. 7)
- 50': Motor von 62 (Fig. 12)
- 51: Abstandhalter für 50 (Fig. 7)
- 52: Eingangszahnrad des Zahnradgetriebes von 30 (Fig. 7, 9)
- 52': Eingangszahnrad des Zahnradgetriebes von 62 (Fig. 12)
- 53: Ausgangszahnrad vom Zahnradgetriebe bei 30 (Fig. 7, 9)
- 53': Zahnrad-Segment vom Zahnradgetriebe bei 62 (Fig. 12)
- 54: erster Arm eines Doppelarm-Hebels (Fig. 9, 7)
- 55: Lagerwelle vom Doppelarm-Hebel (Fig. 6, 7, 9)
- 55': Lagerwelle für 53', 47 (Fig. 12)
- 56: zweiter Arm vom Doppelarm-Hebel (Fig. 6, 9)
- 57: Längsführung für 58 in 54, Führung (Fig. 9, 10)
- 58: Führungsglied an 53 für 57 (Fig. 9)
- 59: Gelenkstift für 56 an 32 (Fig. 6a, 9)
- 60.1: erstes Kulissengetriebe von 62 (Fig. 12)
- 60.2: zweites Kulissengetriebe von 62 (Fig. 12)
- 61: zweites Ausführungsbeispiel des Moduls (Fig. 11)
- 62: drittes Ausführungsbeispiel des Moduls (Fig. 12)
- 63.1: erste schlitzförmige Kulisse von 60.1 (Fig. 12)
- 63.2: zweite schlitzförmige Kulisse von 60.2 (Fig. 12)
- 64.1: rollenförmiger Kulissenstein für 60.1 (Fig. 12)
- 64.2: rollenförmiger Kulissenstein für 60.2 (Fig. 12)
- 65: Schulter an 38 (Fig. 6a)
- 66: Gegenschulter an 20 (Fig. 6a)

## Patentansprüche

1. Vorrichtung zum Öffnen eines Schlosses, welches zwischen einem beweglichen Teil der Karosserie eines Fahrzeugs, wie einer Heckklappe (15), und einem ruhenden Teil der Karosserie wirksam ist,
und die Vorrichtung zugleich zur Bilderfassung eines Außenbereichs vom Fahrzeug mittels einer Kamera (31) dient,
mit einem schalenförmigen Träger (Trägerschale 10), der in einem Durchbruch (16) einer Außenverkleidung (17) der Karosserie sich befindet,
mit einer Handhabe (20), die in der Trägerschale (10) klappbeweglich (21) gelagert (11) und zwischen zwei Klapplagen (20.1, 20.2) überführbar ist,
nämlich einer Zuklapplage (20.1), wo die unbetätigte Handhabe (20) die Schalenöffnung (12) der Trägerschale (10) verschließt und das Schloss unbetätigt lässt
und einer Aufklapplage (20.2), wo die betätigte Handhabe (20) aus der Trägerschale (10) heraus und/oder in die Trägerschale (10) hinein manuell klappbewegt (21) ist und das Schloss betätigt,
wobei die zur Bilderfassung dienende Kamera (31) an einer Rückwand (23) der Trägerschale (10) sitzt,
**dadurch gekennzeichnet,**
**dass** die Rückwand (23) der Trägerschale (10) ein Loch (25) aufweist, hinter welchem das Gehäuse (33) eines Moduls (Modulgehäuse) befestigt ist,
**dass** im Modulgehäuse (33) ein Halter (32) für die Kamera (Kamerahalter) sowohl schwenkbar gelagert als auch translatorisch geführt ist, um die Kamera (31) zwischen zwei Stellungen (31.1, 31.2) zu verschwenken, nämlich einerseits einer Einfahrstellung (31.1) und andererseits einer Ausfahrstellung (31.2),
und **dass** am Modulgehäuse (33) sowohl ein Antrieb (30) als auch ein Getriebe zur rotatorisch-translatorischen Bewegung (32.3, 32.5) des Kamerahalters (32) angeordnet sind.

2. Vorrichtung nach Anspruch 1, **dadurch gekennzeichnet, dass** in der Einfahrstellung die Kamera (31) von einem Fenster (37) im Modulgehäuse (33) abgekehrt ist und im Inneren (35) des Modulgehäuses (33) eine raumsparende Längsposition einnimmt.

3. Vorrichtung nach Anspruch 1, **dadurch gekennzeichnet, dass** in der Ausfahrstellung die Kamera (31) eine Neigungsposition im Gehäuseinneren (35) einnimmt und dabei mit ihrem Bild-Aufnahme-Ende (36) aus dem Modulgehäuse (33) herausragt.

4. Vorrichtung nach Anspruch 3, **dadurch gekennzeichnet, dass** die Kamera (31) in der Ausfahrstellung auch aus der Schalenöffnung (12) der Trägerschale (10) herausragt und dass der Antrieb ein elektrischer Motor ist.

5. Vorrichtung nach einem der Ansprüche 1 bis 4, **dadurch gekennzeichnet, dass** in der Ausfahrstellung (31.2) des Kamerahalters (32) die Kamera (31) im Modulgehäuse (33) annähernd parallel zur Aufklapplage (20.2) der Handhabe (20) in der Trägerschale (10) angeordnet ist.

6. Vorrichtung nach einem der Ansprüche 1 bis 5, **dadurch gekennzeichnet, dass** einer Schar von unterschiedlichen Typen der Vorrichtung ein einheitliches Modul (30) zugeordnet ist, welches wahlweise an einer der unterschiedlichen Vorrichtungen befestigbar und davon wieder lösbar ist.

7. Vorrichtung nach einem der Ansprüche 1 bis 6, **dadurch gekennzeichnet, dass** das Fenster (37) vom Modulgehäuse (33) durch einen Deckel (38) verschließbar ist, welcher Bestandteil des Moduls (30) ist.

8. Vorrichtung nach Anspruch 7, **dadurch gekennzeichnet, dass** der Deckel (38) am Modulgehäuse (33) seinerseits schwenkgelagert (39) ist und unter einer Federbelastung (27) steht, die bestrebt ist, den Deckel (38) an das Fenster (37) vom Modulgehäuse (33) anzudrücken.

9. Vorrichtung nach Anspruch 7 oder 8, **dadurch gekennzeichnet, dass** zwischen dem Fenster (37) vom Modulgehäuse (33) und dem Deckel (38) eine Dichtung (28) angeordnet ist, die in der Schließposition (38.1) des Deckels (38) das Gehäuseinnere (35) vom Modulgehäuse (33) gegenüber dem Innenraum (13) der Trägerschale (10) absperrt.

10. Vorrichtung nach einem der Ansprüche 7 bis 8, **dadurch gekennzeichnet, dass** ein Betätiger an dem Kamerahalter (32) oder am zur Bewegung (32.3, 32.5) des Kamerahalters (32) dienenden Getriebe die Bewegung (48) des Deckels (38) bezüglich des Fensters (37) vom Modulgehäuse (33) bewirkt.

11. Vorrichtung nach Anspruch 8 und 10, **dadurch gekennzeichnet, dass** der Betätiger aus einem Vorsprung (46) am Kamerahalter (32) besteht, der bei der Schwenkverstellung (32.3) des Kamerahalters (32) aus der Einfahrstellung (32.1) in die Ausfahrstellung (32.2) der Kamera (31) den Deckel (38) gegen dessen Federbelastung (27) aufschwenkt.

12. Vorrichtung nach einem der Ansprüche 1 bis 11, **dadurch gekennzeichnet, dass** zur rotatorisch-translatorischen Bewegung (32.3 bis 32.5) des Kamerahalters (32) mindestens ein Kulissengetriebe (40.1, 40.2) dient.

13. Vorrichtung nach einem der Ansprüche 11 bis 12, **dadurch gekennzeichnet, dass** das Modulgehäuse (33) aus einer Hülse mit Rechteckprofil besteht, in deren vorderer Hülsenwand (33.1) das Fenster (37) vom Modulgehäuse (33) eingelassen ist
und dass an den beidseitig zu dieser vorderen Hülsenwand (33.1) angeordneten Seitenwänden (33.2, 33.4) der Hülse übereinstimmende Teile (41.1, 41.2) der Kulisse sich befinden.

14. Vorrichtung nach einem der Ansprüche 1 bis 13, **dadurch gekennzeichnet, dass** ein Zahnradgetriebe (52, 53) zur Bewegung des Kamerahalters (32) dient,
und dass dem Zahnradgetriebe (52, 53) ein Doppelarm-Hebel (54 bis 56) nachgeschaltet ist, dessen beide Arme (54, 56) miteinander drehfest (55) verbunden und mit ihrer gemeinsamen Lagerwelle (55) im Modulgehäuse (33) schwenkgelagert sind,
dass der eine Arm (54) über eine Führung (57) und ein darin laufendes Führungsglied (58) am Ausgangszahnrad (53) des Getriebes angreift,
und dass der andere Arm (56) vom Doppelarm-Hebel am Kamerahalter (32) angelenkt (39) ist.

## Claims

1. Device for opening a lock which is effective between a movable part of the carriage of a motor vehicle, like a trunk flap (15), and a fixed part of the carriage,
said device serving as well to capture an image on the exterior of the vehicle by means of a camera (31),
with a shell-formed bearer (bearer shell 10) which is found in a breakthrough (16) of an exterior cladding (17) of the carriage,
with a handle (20) which is flappably (21) mounted (11) in the bearer shell (10) and is transferable between two flap positions (20.1, 20.2),
namely, a flap-closed position (20.1) where the non-activated handle (20) closes the shell opening (12) of the bearer shell (10) and leaves the lock inactivated,
and a flap-open position (20.2) where the activated handle (20) is manually flapped (21) out of the bearer shell (10) and/or into the bearer shell (10) and the lock activated,
whereby the camera (31) serving to capture an image sits on a rear wall (23) of the bearer shell (10),
thereby **characterized,**
**in that** the rear wall (23) of the bearer shell (10) has a hole (25) behind which is attached the housing (33) of a module (module housing),
**in that** in the module housing (33) a holder (32) for the camera (camera holder) is swivel-mounted as well as translation-conducted in order to swivel the camera (31) between two positions (31.1, 31.2), namely, on the one hand a drive-in position (31.1) and on the other a drive-out position (31.2),
and **in that** arranged on the module housing (33) is both a drive (30) as well as a gear mechanism for the rotary-translational motion (32.3, 32.5) of the camera holder (32).

2. Device pursuant to Claim 1, **characterized in that** in the drive-in position the camera (31) is faced away from a window (37) in the module housing (33), and in the interior (35) of the module housing (33) takes up a space-saving longitudinal position.

3. Device pursuant to Claim 1, **characterized in that** in the drive-out position, the camera (31) takes up a slanting position in the interior (35) of the housing and thereby protrudes with its image-capture end (36) from the module housing (33).

4. Device pursuant to Claim 3, **characterized in that** in the drive-out position, the camera (31) also protrudes from the shell opening (12) of the bearer shell (10), and **in that** the drive is an electric motor.

5. Device pursuant to one of the claims 1 to 4, **characterized in that** in the drive-out position (31.2) of the camera holder (32) the camera (31) in the module housing (33) is arranged approximately parallel to the flap-open position (20.2) of the handle (20) in the bearer shell (10).

6. Device pursuant to one of the claims 1 to 5, **characterized in that** a uniform module (30) is assigned to a host of different types of the device, and this module is optionally attachable to one of the different devices and likewise detachable therefrom.

7. Device pursuant to one of the claims 1 to 6, **characterized in that** the window (37) of the module housing (33) is closable by means of a lid (38) which is a component of the module (30).

8. Device pursuant to Claim 7, **characterized in that** the lid (38) is on its part swivel-mounted (39) on the module housing (33) and spring-loaded (27) to press the lid (38) onto the window (37) of the module housing (33).

9. Device pursuant to Claim 7 or 8, **characterized in that** arranged between the window (37) of the module housing (33) and the lid (38) is a sealing (28) which when the lid (38) is in the close position (38.1) blocks the housing interior (35) of the module housing (33) vis-à-vis the interior (13) of the bearer shell (10).

10. Device pursuant to one of the claims 7 to 8, **characterized in that** an actuator on the camera holder (32) or on the gear mechanism serving to move (32.3, 32.5) the camera holder (32) actuates the motion (48) of the lid (38) relative to the window (37) of the module housing (33).

11. Device pursuant to Claim 8 and 10, **characterized in that** the actuator comprises a ledge (46) on the camera holder (32), whereby when the camera holder (32) is swiveling (32.3) from the drive-in position (32.1) to the drive-out position (32.2) of the camera (31) this ledge swings the lid (38) against its spring-load (27).

12. Device pursuant to one of the claims 1 to 11, **characterized in that** the rotary-translational motion (32.3 to 32.5) of the camera holder (32) is brought about by at least one gate type gear (40.1, 40.2).

13. Device pursuant to one of the claims 11 to 12, **characterized in that** the module housing (33) comprises a square-profile casing into the front casing wall (33.1) of which the window (37) of the module housing (33) has been inserted,
and **in that** arranged on both side walls (33.2, 33.4) adjacent to this front casing wall (33.1) are the parts (41.1, 41.2) of the gate which correspond to the casing.

14. Device pursuant to one of the claims 1 to 13, **characterized in that** a pinion gear (52, 53) serves to move the camera holder (32),
and **in that** located downstream of the pinion gear (52, 53) is a double-arm lever (54 to 56) both arms of which are rotationally fixed-coupled (55) and swivel-mounted in the module housing (33) with their common bearing shaft (55),
**in that** one arm (54) grips the exit pinion gear (53) of the gear mechanism by means of a guidance (57) and a guidance element (58) running therein,
and **in that** the other arm (56) of the double-arm lever is hinged (39) to the camera holder (32).

## Revendications

1. Dispositif pour ouvrir une serrure opérante entre une partie mobile de la carrosserie d'un véhicule, telle qu'un hayon (15), et une partie au repos de ladite carrosserie,
et ce dispositif servant en même temps à la prise d'image dans une zone extérieure du véhicule au moyen d'une caméra (31),
avec un support en forme de coque (coque support 10), support qui se trouve dans un orifice de passage (16) ménagé dans le capotage extérieur (17) de la carrosserie,
avec une manette (20) reposant sur palier (11) qui lui permet d'effectuer un mouvement basculant (21) dans la coque support (10) et qu'il est possible de déplacer entre deux positions de basculement (20.1, 20.2),
à savoir une position basculée fermée (20.1) où la manette (20) non actionnée obture l'ouverture (12) de la coque support (10) et laisse la serrure non actionnée,
et une position basculée ouverte (20.2) où la manette (20) actionnée bascule (21) par actionnement manuel hors de la coque support (10) et/ou dans la coque support (10), et actionne la serrure,
la caméra (31) qui sert à la prise d'image étant en assise contre une paroi arrière (23) de la coque support (10),
**caractérisé en ce que**,
la paroi arrière (23) de la coque support (10) présente un trou (25) derrière lequel est fixé le boîtier (33) d'un module (boîtier de module),
dans le boîtier de module (33) un support (32) de la caméra (support de caméra) aussi bien pivote sur palier que se trouve guidé en translation afin de faire pivoter la caméra (31) entre deux positions (31.1, 31.2), à savoir d'une part entre une position escamotée (31.1) et d'autre part une position sortie (31.2)
et **en ce que** sur le boîtier (33) de module sont disposés aussi bien un entraînement (30) qu'un réducteur permettant d'obtenir le mouvement de rotation-translation (32.3, 32.5) du support (32) de caméra.

2. Dispositif selon la revendication 1, **caractérisé en ce qu'**en position escamotée, la caméra (31) ne regarde pas une fenêtre (37) dans le boîtier (33) de module et qu'elle prend, à l'intérieur (35) du boîtier (33) de module une position longitudinale économisant de la place.

3. Dispositif selon la revendication 1, **caractérisé en ce qu'**en position sortie, la caméra (31) prend une position inclinée à l'intérieur (35) du boîtier et fait ce faisant saillie, par son extrémité (36) d'enregistrement d'image, hors du boîtier (33) de module.

4. Dispositif selon la revendication 3, **caractérisé en ce que** la caméra (31) en position sortie fait également saillie hors de l'ouverture (12) que comporte la coque support (10), et que l'entraînement est un moteur électrique.

5. Dispositif selon l'une des revendications 1 à 4, **caractérisé en ce que** lorsque le support (32) de caméra se trouve en position sortie (31.2), la caméra (31) dans le boîtier (33) de module est disposée approximativement parallèle à la position basculée ouverte (20.2) de la manette (20) dans la coque support (10).

6. Dispositif selon l'une des revendications 1 à 5, **caractérisé en ce qu'**un module (30) uniforme est assigné à un ensemble de types différents de ce dispositif, module qu'il est possible de fixer au choix contre l'un des différents dispositifs et de l'en redétacher ensuite.

7. Dispositif selon l'une des revendications 1 à 6, **caractérisé en ce que** la fenêtre (37) du boîtier (33) de module est obturable par un couvercle (38) faisant partie intégrante du module (30).

8. Dispositif selon la revendication 7, **caractérisé en ce que** le couvercle (38) sur le boîtier (33) de module repose de son côté sur palier (39) lui permettant de pivoter et se trouve sous une contrainte ressort (27) tendant à pousser le couvercle (38) contre la fenêtre (37) du boîtier (33) de module.

9. Dispositif selon la revendication 7 ou 8, **caractérisé en ce qu'**entre la fenêtre (37) du boîtier (33) de module et le couvercle (38) est disposé un joint (28) qui, lorsque le couvercle (38) se trouve en position fermée (38.1), étanche l'intérieur (35) du boîtier (33) de module par rapport à la cavité intérieure (13) de la coque support (10).

10. Dispositif selon l'une des revendications 7 et 8, **caractérisé en ce qu'**un moyen d'actionnement sur le support (32) de caméra ou sur le réducteur servant à déplacer (32.3, 32.5) le support (32) de caméra provoque le mouvement (48) du couvercle (38) par rapport à la fenêtre (37) du boîtier (33) de module.

11. Dispositif selon les revendications 8 et 10, **caractérisé en ce que** le moyen d'actionnement consiste en une saillie (46) que comporte le support (32) de caméra, laquelle saillie - lorsque le support (32) de caméra quitte en basculant (32.3) la position escamotée (32.1) pour se rendre sur la position sortie (32.2) de la caméra (31) - fait pivoter le couvercle (38) en position ouverte en vainquant la contrainte (27) qu'exerce dessus le ressort.

12. Dispositif selon l'une des revendications 1 à 11, **caractérisé en ce qu'**au moins une transmission à coulisse (40.1, 40.2) sert à obtenir le mouvement de rotation-translation (32.3 à 32.5) du support (32) de caméra.

13. Dispositif selon l'une des revendications 11 à 12, **caractérisé en ce que** le boîtier (33) de module se compose d'une douille ayant un profil rectangulaire, dans la paroi avant (33.1) de laquelle a été encastrée la fenêtre (37) du boîtier (33) de module,
et **en ce que** contre les parois latérales (33.2, 33.4) de la douille agencées des deux côtés de cette paroi avant (33.1) se trouvent des pièces concordantes (41.1, 41.2) de la coulisse.

14. Dispositif selon l'une des revendications 1 à 13, **caractérisé en ce qu'**un réducteur (52, 53) à pignons sert à déplacer le support (32) de caméra,
et **en ce qu'**un levier (54 à 56) à bras doubles a été placé en aval du réducteur (52, 53) à pignons, levier dont les deux bras (54, 56) sont reliés solidaires en rotation (55) et pivotent sur palier par le biais de leur arbre conjoint (55) dans le boîtier (33) de module,
**en ce qu'**un bras (54) attaque le pignon de sortie (53) du réducteur via un guide (57) et un organe de guidage (58) circulant dedans,
et **en ce que** l'autre bras (56) du levier à bras doubles est articulé (39) contre le support (32) de caméra.
